# EUROPÄISCHE PATENTANMELDUNG

(11) **EP 0 846 579 A2**
(43) Veröffentlichungstag der Anmeldung: **10.06.1998**
(21) Anmeldenummer: 97121244.4
(22) Anmeldetag: 03.12.1997
(51) Int. Cl.: B60C 11/12, B60C 11/13

(54) **Fahrzeugreifen mit einer Lauffläche mit im wesentlichen axial verlaufenden Einschnitten**

(30) Priorität: 06.12.1996 DE 19650702
(71) Anmelder: Continental Aktiengesellschaft, 30165 Hannover (DE)
(72) Erfinder: Diensthuber, Franz, 30559 Hannover (DE); Haigerer, Christian, 8010 Graz (AT); Mundl, Reinhard, Dr., 30539 Hannover (DE); Rodewald, Helmut, 31249 Rötzum (DE)

(57) **Zusammenfassung**

Zur Verbesserung der Griffigkeit auf feuchten und trockenen Straßen bei hoher Griffigkeit auf festgefahrenem Schnee und auf Eis wird ein Fahrzeugreifen (1) vorgeschlagen mit einer Lauffläche (2), welche zumindest in einem ihrer axialen Randbereiche (L, R) in der Draufsicht im wesentlichen axial verlaufende Einschnitte (3a, 3b) aufweist, die in solcher Weise gewellt sind, dass die Wellenberge (4) und -täler (5) im wesentlichen Geraden sind, die sich in der Querebene diagonal erstrecken,
- wobei sich die Menge der im wesentlichen axial verlaufenden Einschnitte (3a, 3b) in eine erste Untermenge mit Einschnitten (3a) und in eine zweite Untermenge mit Einschnitten (3b) gliedert,
- wobei die Wellenberge (4a) und -täler (5a) der Einschnitte (3a) der ersten Untermenge in der Weise orientiert sind, dass man, wenn man in der Querebene entlang dieser Einschnitte (3a) nach radial außen geht, nach axial innen gelangt und
- wobei die Wellenberge (4b) und -täler (5b) der Einschnitte (3b) der zweiten Untermenge in der Weise orientiert sind, dass man, wenn man in der Querebene entlang dieser Einschnitte (3b) nach radial außen geht, nach axial außen gelangt,
- wobei die Einschnitte (3a und 3b) beider Mengen in gemeinsamen Spuren (A, B) von Einschnitten (3) angeordnet sind.

## Beschreibung

Die Erfindung bezieht sich auf einen Fahrzeugreifen mit einer Lauffläche, welche zumindest in einem ihrer axialen Randbereiche in der Draufsicht im wesentlichen axial verlaufende Einschnitte aufweist, die in solcher Weise gewellt sind, dass die Wellenberge und -täler im wesentlichen Geraden sind, die in der Querebene diagonal geneigt sind; solche Reifen sind bekannt. Die im wesentlichen axial verlaufenden Einschnitte, die im Rahmen dieser Anmeldung auch als Quereinschnitte bezeichnet werden, verlaufen - wie im Stand der Technik bekannt - vorzugsweise nicht exakt axial sondern in einer Neigung zur Axialen um 10° bis 60°. sofern die Reifenlauffläche mit Querrillen ausgestattet ist, verlaufen sie vorzugsweise - wie ebenfalls an sich bekannt - im wesentlichen parallel zu diesen Querrillen.

Das zwischen Einschnitten stehenbleibende Gummi wird als Steg bezeichnet. Als eine Spur von Klötzen ist die Hintereinander-Anordnung von Profilklötzen in Umfangsrichtung bezeichnet. Analog ist als eine Spur von Einschnitten die Hintereinander-Anordnung von Einschnitten in Umfangsrichtung bezeichnet.

Grundsätzlich verringern Einschnitte die Steifigkeit, insbesondere gegenüber Kräften senkrecht zu diesen Einschnitten; Quereinschnitte verringern also insbesondere die Längssteifigkeit. Die Laufflächenerweichung führt zu einer genaueren Anpassung der Reifenoberfläche an die Rauhtiefen der Fahrbahn im Latsch, wodurch ein höherer Reibschluß ermöglicht wird.

Darüberhinaus ist die traktionsfördernde Wirkung insbesondere auf verschneiten Straßen bekannt, die darauf zurückgeführt wird, dass die Stegverbiegung, die schon bei geringen Längskräften auftritt, sich bis in die in den Latsch reichenden Stirnflächen der Stege als deren Schrägstellung auswirkt, sodass diese nicht plan aufliegen sondern vielmehr mit einer ihrer Kanten. Diese Kantenausbildung verbessert insbesondere den Griff auf festgefahrenem Schnee und auf Eis.

Es hat sich herausgestellt, dass die Stirnseitenschrägstellung der Stege den Bremsweg auf nasser Straße verschlechtern. Dieser Nachteil schmerzt bei modernen Winterreifen besonders, weil es wegen der schneeärmeren aber regenreicheren Winter nicht mehr allein auf Griffigkeit auf Schnee sondern auch auf gutes Bremsen auf feuchter Straße ankommt. Auch auf trockener Straße wird hoher Kraftschluß erwartet wie von einem Sommerreifen; auch auf trockener Straße führt die Sirnseitenschrägstellung zu einer Verschlechterung der - allerdings nach wie vor hohen - Griffigkeit. Ausgehend von den bewährten Winterreifen wäre das Bremsverhalten auf feuchten und auch etwas auftrockenen Straßen dadurch zu verbessern, dass die Anzahl der Einschnitte, insbesondere der Quereinschnitte, gesenkt würde. Dabei müßte aber ein verschlechtertes Verhalten auf Schnee hingenommen werden.

Aus dem französischen Patent Nr. 791 250 aus dem Jahre 1935 ist ein Fahrzeugreifen mit einer Lauffläche bekannt, welche in einem axialen Randbereich in der Draufsicht im wesentlichen axial verlaufende Einschnitte mit einer solchen Wellung aufweist, dass die Wellenberge und -täler Geraden sind und sich in der Querebene in solcher Orientierung diagonal erstrecken, dass man, wenn man in der Querebene entlang der Einschnitte nach radial außen geht, nach axial außen gelangt.

Aus der deutschen Patentanmeldung P 44 27 895.0 aus dem Jahre 1994 ist ein Fahrzeugreifen mit einer Lauffläche bekannt, welche in einem oder in beiden Randbereichen in der Draufsicht im wesentlichen axial verlaufende Einschnitte mit einer solchen Wellung aufweist, dass die Wellenberge und -täler Geraden sind und sich in der Querebene in solcher Orientierung diagonal erstrecken, dass man, wenn man in der Querebene entlang dieser Einschnitte nach radial außen geht, nach axial innen gelangt.

Die beiden zuvor genannten, zueinander spiegelverkehrten Gestaltungen aus dem Stand der Technik zeigten bereits die Tendenz, einerseits durch recht dicht beieinander angeordnete Einschnitte kleine Stirnseitenverdrehungen mit nur geringem Widerstand zuzulassen, andererseits aber durch gegenseitige formschlüssige Verklammerung der Stege eine weitere Vergrößerung der Stirnseitenverdrehung über zunehmender Tangentialkraft weitgehend zu unterbinden. Nach Erkenntnis der Erfinder ist der wesentliche Effekt der, dass bereits eine sehr kleine Stirnseitenverdrehung zur Verbesserung des Griffes auf Schnee und Eis wirksam ist aber noch kaum das Bremsen auf feuchter und trockener Straße beeinträchtigt; eine größere Strinseitenverdrehung verbessert den Griff auf Schnee und Eis nur noch unwesentlich, würde aber das Nass- und Trockenbremsen erheblich verschlechtern. Bei der zweitgenannten Schrift ist dieser Effekt noch besser ausgenutzt als bei der erstgenannten.

Aufgabe der Erfindung ist es, die Griffigkeit auch auf nasser und trockener Straße noch weiter zu verbessern ohne Nachteile oder mit weiterer Verbesserung der Griffigkeit auf Straßen mit Schnee und Eis darauf. Dabei dürfen die Reifen nicht lauter werden; vorzugsweise sollten sie ein als angenehmer empfundenes, weiter bevorzugt ein geringeres Geräusch abstrahlen.

Die Aufgabe wird erfindungsgemäß durch einen Fahrzeugreifen gemäß Anspruch 1 gelöst. Ein solcher Fahrzeugreifen hat eine Lauffläche, welche zumindest in einem ihrer Randbereiche in der Draufsicht im wesentlichen axial verlaufende Einschnitte aufweist, die in solcher Weise gewellt sind, dass die Wellenberge und -täler im wesentlichen Geraden sind, die sich in der Querebene diagonal erstrecken,
- wobei sich die Menge der im wesentlichen axial verlaufenden Einschnitte in eine erste Untermenge mit Einschnitten und in eine zweite Untermenge mit Einschnitten gliedert,
- wobei die Wellenberge und -täler der Einschnitte der ersten Untermenge in der Weise orientiert sind, dass man, wenn man in der Querebene entlang dieser Einschnitte nach radial außen geht, nach axial innen gelangt und
- wobei die Wellenberge und -täler der Einschnitte der zweiten Untermenge in der Weise orientiert sind, dass man, wenn man in der Querebene entlang dieser Einschnitte nach radial außen geht, nach axial außen gelangt,
- wobei die Einschnitte beider Mengen in gemeinsamen Spuren von Einschnitten angeordnet sind.

Der erfindungsgemäße Orientierungswechsel der Wellenberge und -täler zumindest einiger der aufeinanderfolgenden Einschnitte erhöht die formschlüssige, eine weitere Verbiegung blockierende Wirkung der diagonalen Wellung noch weiter. Dies erscheint insofern überraschend, als die Durchmischung von Einschnitten nach den beiden vorgenannten, nächstliegenden Dokumenten aus dem Stand der Technik auch einen Mittelwert in den erzielten Eigenschaften hätte erwarten lassen; die Griffigkeit erfindungsgemäßer Reifen übertrifft aber überraschenderweise bei vergleichbarer Gummimischung diejenige von Reifen nach beiden vorgenannten Dokumenten.

Bei unveränderter Einschnittanzahl und Einschnittgestalt in der Draufsicht auf den Reifen ist die Stirnseitenverbiegung weiter reduziert, was das Nass- und Trockenbremsen verbessert. Traktion- und Bremsvermögen auf festgefahrenem Schnee und Eis sind dennoch nicht verschlechtert, weil die zur Kantenbildung erforderliche kleine Stirnseitenverbiegung bereits - unverändert - bei sehr kleinen Tangentialkräften auftritt.

Die erzielte Verbesserung im Nass- und Trockenbremsen einschränkend erlaubt die Erfindung auch eine weitere Erhöhung der Einschnittanzahl. Auf diese Weise kann die Griffigkeit auf festem Schnee und Eis gesteigert werden.

Die Einschnitte in der Lauffläche des Fahrzeugreifens sind vorzugsweise gemäß Anspruch 2 so in einer Spur angeordnet, dass auf jeden Einschnitt mit einer Orientierung der Wellenberge und -täler derart, dass man, wenn man in der Querebene entlang dieser Einschnitte nach radial außen geht, nach axial innen gelangt, ein Einschnitt folgt mit einer Orientierung der Wellenberge und -täler derart, dass man, wenn man in der Querebene entlang dieser Einschnitte nach radial außen geht, nach axial außen gelangt. Durch diesen Wechsel in der Orientierung der Wellenberge und -täler wird der von den Einschnittflanken abgestrahlte Schall etwas variiert, was die Tonalität des insgesamt vom Reifen abgestrahlten Geräusch senkt.

Die Einschnitte in der Lauffläche des Fahrzeugreifens sind vorzugsweise gemäß Anspruch 3 so in einer Spur angeordnet, dass auf jeden Einschnitt mit einer Orientierung der Wellenberge und -täler derart, dass man, wenn man in der Querebene entlang dieser Einschnitte nach radial außen geht, nach axial außen gelangt, ein Einschnitt folgt mit einer Orientierung der Wellenberge und -täler derart, dass man, wenn man in der Querebene entlang dieser Einschnitte nach radial außen geht, nach axial innen gelangt. Hierbei handelt es sich also um den inversen Wechsel zu dem im Absatz zuvor beschriebenen. Auch durch einen solchen Wechsel in der Orientierung der Wellenberge und -täler wird der von den Einschnittflanken abgestrahlte Schall etwas variiert, was die Tonalität des insgesamt vom Reifen abgestrahlten Geräusch senkt.

Es ist auch möglich, gemäß den Ansprüchen 1 bis 3 Einschnitte mit der einen Orientierung der Wellenberge und -täler alternierend zu denen mit der anderen Orientierung der Wellenberge und -täler anzuordnen. In dieser Merkmalskombination wird nach bisheriger Erkenntnis die bestmögliche Griffigkeit erreicht. Die Geräuschabstrahlung ist dabei zumindest nicht verschlechtert.

Zur Tonalitätverringerung scheint es günstiger zu sein, den Orientierungswechsel der Wellenberge und -täler nach keiner so kurz-periodischen Folge auszuführen sondern nach einer Folge längerer Periodenlänge, wie sie in Anspruch 5 angesprochen ist, oder völlig ungleichmäßig; dabei ist in Abschnitten das an sich bekannte direkte Aufeinanderfolgen von Einschnitten mit gleicher Orientierung der Wellenberge und -täler erforderlich, wie es im Anspruch 4 genannt ist.

Die Einschnitte sind in an sich bekannter Weise vorzugsweise so angeordnet, dass die Wellenberge und -täler dieser in der Querebene einen Winkelbetrag zur Radialen zwischen 20° und 70°, vorzugsweise zwischen 30° und 50° einnehmen.

Vorzugsweise haben die Einschnitte in an sich bekannter Weise, gemäß Anspruch 7 eine Schnittweite zwischen 0,3 mm und 1,0 mm.

Die Einschnitte sind gemäß Anspruch 8 vorzugsweise auch in den Spuren des Mittenbereiches mit wechselnder Orientierung der Wellenberge und -täler in periodischer oder nichtperiodischer Reihenfolge angeordnet.

Die Tangentialkraft, ab der Formschluß eintritt, der den Knick in der Biegefederkennlinie hervorruft, wird in an sich bekannter Weise im wesentlichen durch das Verhältnis der 3. Potenz der Einschnitttiefe zur 1. Potenz der Einschnittdicke bestimmt; je nach Einschnittdichte, -tiefe und Gummihärte ergibt sich eine günstige Lage des Abknickpunktes bei einer Einschnittdicke zwischen 0,3 und 1,0 mm. Es wird als Vorteil gewertet, daß diese Einschnittdicken sich im Bereich des schon Bekannten bewegen, was die Umstellung auf die Erfindung erleichtert.

Speziell an besonders einschnittreichen Winterreifen für PKW, wo heutzutage Einschnittdicken zwischen 0,5 und 0,6 mm üblich sind, scheint die optimale Weite der Einschnitte leicht darunter zu liegen, nämlich etwa bei 0,4 mm.

Zur Realisierung erfindungsgemäßer Reifen braucht an den Reifenrohlingen nichts geändert zu werden. Es sind allerdings geänderte Vulkanisationsformen erforderlich. In den Vulkanisationsformen sind in an sich bekannter Weise solche Einschnittbleche zu verankern, die eine Schrägstellung der Wellenberge und -täler zur Blechverankerungskante aufweisen. Anstatt die Bleche erst zu stanzen und dann in die Wellung zu biegen scheint es wegen der Schrägstellung der Wellenberge und -täler und damit zusammenhängend der unterschiedlichen Länge der einzelnen Wellenberge und -täler in der Nähe der Ränder zweckmäßig zu sein, erst größere Bleche in die gewünschte Wellung zu biegen parallel zu den Kanten des Blechhalbzeuges und erst danach - nun schräg zu den Kanten des Blechhalbzeuges - die einzelnen Einschnittbleche herauszutrennen, zum Beispiel herauszustanzen.

Die Erindung wird nachfolgend anhand von vier Figuren näher erläutert. Es zeigt
- Fig. 1: in perspektivischer Ansicht einen erfindungsgemäßen Reifen,
- Fig. 2: vergrößert den gleichen Reifen, aufgeschnitten entlang dem in Figur 1 angegebenen Schnittverlauf II-II,
- Fig. 3: vergrößert den gleichen Reifen, aufgeschnitten entlang dem in Figur 1 angegebenen Schnittverlauf III-III,
- Fig. 4: eines aus der Vielzahl von erfindungsgemäßen Blechstücken, die in der Vulkanisationsform zur Herstellung der erfindungsgemäßen Einschnitte zu verankern sind.

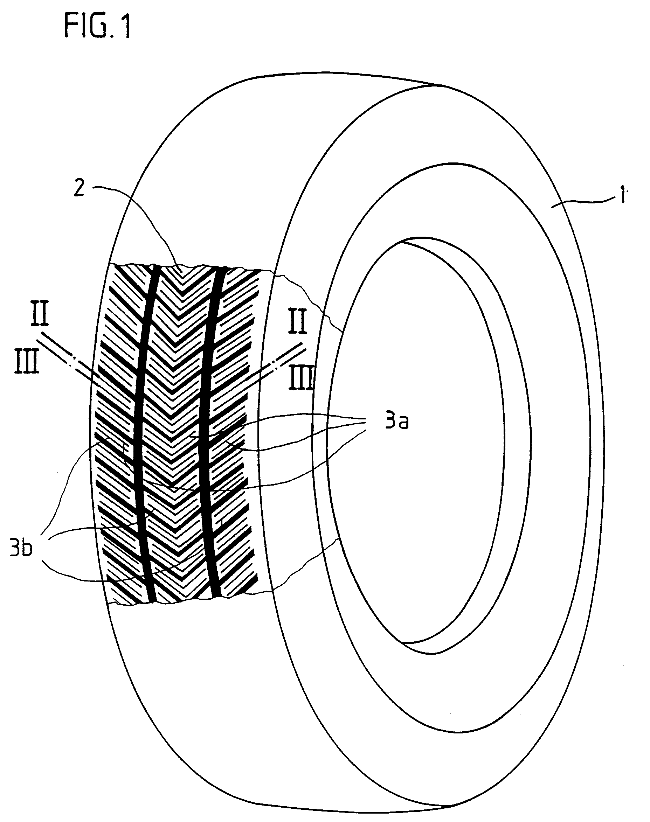

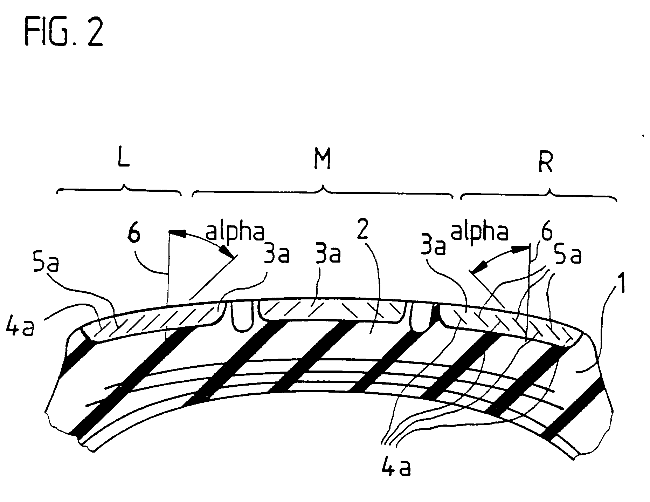

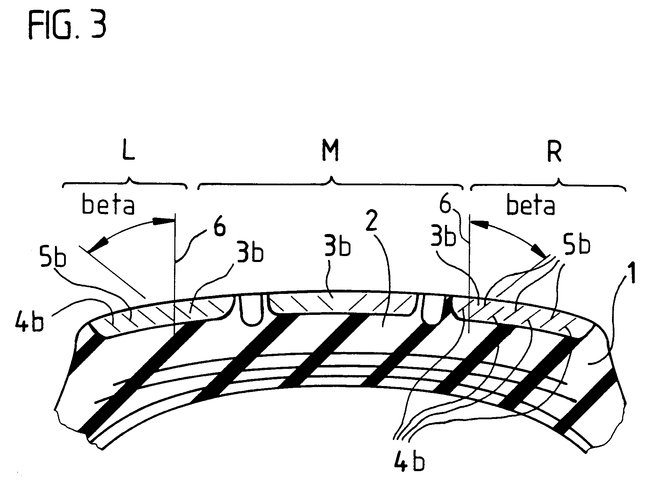

Figur 1 zeigt in perspektivischer Ansicht einen erfindungsgemäßen Reifen 1 mit einer Lauffläche 2, welche über ihrer gesamten axialen Erstreckung in der Draufsicht im wesentlichen axial verlaufende Einschnitte 3a und 3b aufweist. In dick strichpunktierter Linie ist der zu Figur 2 führende Schnittverlauf II-II entlang der Einschnitte 3a und der zu Figur 3 führende Schnittverlauf III-III entlang der Einschnitte 3b angegeben.

Figur 2 zeigt vergrößert den gleichen Reifen 1, jedoch nicht in perspektivischer Ansicht sondern aufgeschnitten in der Querebene entlang von Einschnitten 3a. Die Wellenberge 4a und Wellentäler 5a, wo die Oberfläche gewölbt ist, erscheinen als dünne Volllinien, die gemäß üblicher Darstellung nicht bis zur jeweils benachbarten, in dicker Vollinie dargestellten Körperkante ausgezogen sind. In diesem Ausführungsbeispiel beträgt der Schrägungswinkel alpha 45°.

Die Schrägstellung der Wellenberge 4a und -täler 5a ist in diesem Schnitt so orientiert, dass man beim Gehen von radial innen nach radial außen entlang einem Wellenberg 4a oder -tal 5a nach axial innen gelangt. Bei symmetrischen Reifen sollte der Orientierungswechsel im Mittenbereich M liegen.

Wenngleich - wie hier gezeigt - die erfindungsgemäße Schrägstellung der Wellenberge 4a und -täler 5a vorzugsweise über der gesamten Breite der Lauffläche 2, soweit sie eingeschnitten ist, angewandt ist, ist diese Schrägstellung besonders wichtig in den beiden Randbereichen L und R der Lauffläche 2.

Figur 3 zeigt vergrößert den gleichen Reifen 1 in zur Figur 2 analogen Darstellung, jedoch nicht entlang von Einschnitten 3a geschnitten sondern entlang von Einschnitten 3b. Die Wellenberge 4b und Wellentäler 5b, sind hier umgekehrt herum zur Radialen geneigt wie in Figur 2.

Die Schrägstellung der Wellenberge 4b und -täler 5b ist in diesem Schnitt so orientiert, dass man beim Gehen von radial innen nach radial außen entlang einem Wellenberg 4b oder -tal 5b nach axial außen gelangt. Bei symmetrischen Reifen sollte der Orientierungswechsel im Mittenbereich M liegen.

Auch die so herum orientierte Schrägstellung der Wellenberge 4b und -täler 5b ist vorzugsweise über der gesamten Breite der Lauffläche 2, soweit sie eingeschnitten ist, angewandt; besonders wichtig ist diese Schrägstellung in den beiden Randbereichen L und R der Lauffläche 2.

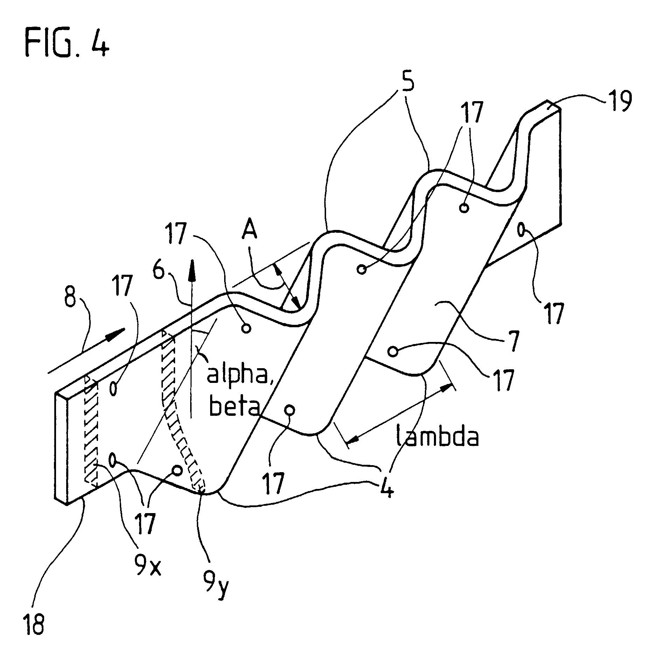

Figur 4 zeigt eines aus der Vielzahl von Blechstücken 7, die in der Vulkanisationsform zur Herstellung der Einschnitte 3a und/oder 3b zu verankern sind, in perspektivischer Darstellung. Durch Wenden dieser Blechstücke 7, also durch Drehen um 180° um die mittlere Radiale oder um die mittlere Axiale - die parallel zur Haupterstreckungsrichtung liegt - des Bleches, lassen sich solche Blechstücke 7 zur Herstellung beider Einschnitt-Typen 3a und 3b verwenden, wenn diese den gleichen Winkelbetrag zur Radialen 6 aufweisen sollen.

Zur Verankerung der Blechstücke 7 in den üblicherweise aus Aluminium bestehenden Segmenten einer Vulkanisationsform sind Durchbrüche 17, die an sich bekannte Befestigungselemente darstellen, vorgesehen. Diese Durchbrüche 17 sind, zur Ermöglichung der Wendung um eine Axiale, sowohl in der Nähe der Blechkante 18 als auch der Blechkante 19 vorgesehen. Soll eine Drehung der Blechstücke 7 um eine Radiale erfolgen, dann ist es hierfür ausreichend, wenn an nur einer der beiden Blechkanten 18 oder 19 Durchbrüche 17 vorhanden sind, die zur Verankerung der Blechstücke 7 in den Segmenten der Vulkanisationsform dienen.

Zur Verständniserleichterung sind in den Figuren 2 und 3 die vordere und hintere Stirnfläche des Bleches 7 radial stehend gezeichnet, obwohl sie bevorzugt - wie bekannt - zumindest bei Sackeinschnitten leicht geneigt zur Radialen verlaufen. Die Wellenberge 4a und/oder 4b und -täler 5a und/oder 5b sind in an sich bekannter Weise geradlinig, jedoch gegenüber der Radialen 6 im Winkel alpha oder beta geneigt. Das Wesentliche der Erfindung ist der Orientierungswechsel - er kann mit Betragsänderungen einhergehen - der Neigung zumindest einiger der in einer Spur aufeinanderfolgenden Einschnitte.

Zur weiteren Verdeutlichung ist in zwei verschiedenen Ebenen quer zur Haupterstreckung 8 der Blechstücke 7 die jeweilige Schnittfläche 9x und 9y in gestrichelter Linie umrissen. Die Haupterstreckung 8 der Blechstücke 7 kann im Winkelbereich +/- 45° zur hier nicht dargestellten Axialen liegen, vorzugsweise bei etwa 20 bis 30°. Die Wellenlänge entlang der Axialen ist mit Lambda bezeichnet.

## Patentansprüche

1. Fahrzeugreifen (1) mit einer Lauffläche (2), welche zumindest in einem ihrer axialen Randbereiche (L, R) in der Draufsicht im wesentlichen axial verlaufende Einschnitte (3a, 3b) aufweist, die in solcher Weise gewellt sind, dass die Wellenberge (4) und -täler (5) im wesentlichen Geraden sind, die sich in der Querebene diagonal erstrecken,
- wobei sich die Menge der im wesentlichen axial verlaufenden Einschnitte (3a, 3b) in eine erste Untermenge mit Einschnitten (3a) und in eine zweite Untermenge mit Einschnitten (3b) gliedert,
- wobei die Wellenberge (4a) und -täler (5a) der Einschnitte (3a) der ersten Untermenge in der Weise orientiert sind, dass man, wenn man in der Querebene entlang dieser Einschnitte (3a) nach radial außen geht, nach axial innen gelangt und
- wobei die Wellenberge (4b) und -täler (5b) der Einschnitte (3b) der zweiten Untermenge in der Weise orientiert sind, dass man, wenn man in der Querebene entlang dieser Einschnitte (3b) nach radial außen geht, nach axial außen gelangt,
- wobei die Einschnitte (3a und 3b) beider Mengen in gemeinsamen Spuren (A, B) von Einschnitten (3) angeordnet sind.

2. Fahrzeugreifen (1) nach Anspruch 1, dadurch gekennzeichnet, dass in einer Spur (A und/oder B) auf jeden Einschnitt (3a) mit einer Orientierung der Wellenberge (4a) und -täler (5a) derart, dass man, wenn man in der Querebene entlang dieser Einschnitte (3a) nach radial außen geht, nach axial innen gelangt, ein Einschnitt (3b) folgt mit einer Orientierung der Wellenberge (4b) und -täler (5b) derart, dass man, wenn man in der Querebene entlang dieser Einschnitte (3b) nach radial außen geht, nach axial außen gelangt.

3. Fahrzeugreifen (1) nach Anspruch 1 und/oder 2, dadurch gekennzeichnet, dass in einer Spur (A und/oder B) auf jeden Einschnitt (3b) mit einer Orientierung der Wellenberge (4b) und -täler (5b) derart, dass man, wenn man in der Querebene entlang dieser Einschnitte (3b) nach radial außen geht, nach axial außen gelangt, ein Einschnitt (3a) folgt mit einer Orientierung der Wellenberge (4a) und -täler (5a) derart, dass man, wenn man in der Querebene entlang dieser Einschnitte (3a) nach radial außen geht, nach axial innen gelangt.

4. Fahrzeugreifen nach einem oder mehreren der vorangehenden Ansprüche, dadurch gekennzeichnet, dass in einer Spur (A und/oder B) auf einen Einschnitt (3a oder 3b) mit einer Orientierung der Wellenberge (4a bzw. 4b) und -täler (5a bzw. 5b) derart, dass man, wenn man in der Querebene entlang dieser Einschnitte (3a bzw. 3b) nach radial außen geht, nach axial innen bzw. außen gelangt, ein oder mehrere Einschnitte (3a bzw. 3b) mit derselben Orientierung der Wellenberge (4a bzw. 4b) und -täler (5a bzw. 5b) folgen.

5. Fahrzeugreifen nach einem oder mehreren der vorangehenden Ansprüche, dadurch gekennzeichnet, dass in einer Spur (A und/oder B) die Anordnung der Reihenfolge der Einschnitte (3a und 3b) periodisch ist.

6. Fahrzeugreifen (1) nach Anspruch 1 dadurch gekennzeichnet, daß die Wellenberge (4a und/oder 4b) und -täler (5a und/oder 5b) in der Querebene einen Winkel (alpha bzw. beta) zur Radialen (6) zwischen 20° und 70°, vorzugsweise zwischen 30° und 50° einnehmen.

7. Fahrzeugreifen (1) nach Anspruch 1 dadurch gekennzeichnet, daß die Einschnitte (3a und 3b) in an sich bekannter Weise eine Schnittweite (s) zwischen 0,3 mm und 1,0 mm aufweisen.

8. Fahrzeugreifen (1) nach einem der vorangehenden Ansprüche dadurch gekennzeichnet, daß im axial inneren Bereich (M) weitere Einschnitte (3a und/oder 3b) angeordnet sind, die im wesentlichen axial verlaufen, und in solcher Weise gewellt sind, dass die Wellenberge (4a und/oder 4b) und -täler (5a und/oder 5b) im wesentlichen Geraden sind, die sich in der Querebene erstrecken, wobei sowohl solche Einschnitte (3a) in dem besagten Mittenbereich (M) angeordnet sind, die in der Weise orientiert sind, dass man, wenn man in der Querebene entlang dieser Einschnitte (3a) nach radial außen geht, nach axial innen gelangt, als auch solche Einschnitte (3b), die in der Weise orientiert sind, dass man, wenn man in der Querebene entlang dieser Einschnitte (3b) nach radial außen geht, nach axial außen gelangt.
